# EUROPÄISCHE PATENTANMELDUNG

(11) **EP 2 492 487 A1**
(43) Veröffentlichungstag der Anmeldung: **29.08.2012**
(21) Anmeldenummer: 12151195.0
(22) Anmeldetag: 16.01.2012
(51) Int. Cl.: F02M 25/07, F02D 9/04, F16K 1/22

(54) **Klappenvorrichtung für eine Verbrennungskraftmaschine**

(30) Priorität: 23.02.2011 DE 102011000894
(71) Anmelder: Pierburg GmbH, 41460 Neuss (DE)
(72) Erfinder: Hüsges, Hans-Jürgen, 47877 Willich (DE); Kühnel, Hans-Ulrich, 41239 Mönchengladbach (DE)
(74) Vertreter: Patentanwälte ter Smitten Eberlein Rütten Partnerschaftsgesellschaft

(57) **Zusammenfassung**

Bei Klappenvorrichtungen im Abgasbereich ist häufig die thermische Belastung zu hoch, was zu Fehlern bei der Regelung führt.

Es wird daher eine Klappenvorrichtung für eine Verbrennungskraftmaschine mit einem Gehäuse (2), einer Welle (10), die im Gehäuse (2) drehbar gelagert ist, einem Aktor über den die Welle (10) drehbar ist und zumindest einem Klappenkörper (12, 14), der auf der Welle (10) befestigt ist, wobei durch Drehen der Welle (10) ein freier Durchströmungsquerschnitt zumindest eines im Gehäuse (2) ausgebildeten Kanals (4, 6) regelbar ist, vorgeschlagen, bei der erfindungsgemäß die Welle (10) aus einer Bronze hergestellt ist.

Dies führt zu einer deutlich verbesserten Wärmeabfuhr und gleichzeitiger Lagerung ohne zusätzliche Buchsen oder Lager.

## Beschreibung

Die Erfindung betrifft eine Klappenvorrichtung für eine Verbrennungskraftmaschine mit einem Gehäuse, einer Welle, die im Gehäuse drehbar gelagert ist, einem Aktor, über den die Welle drehbar ist und zumindest einem Klappenkörper, der auf der Welle befestigt ist, wobei durch Drehen der Welle ein freier Durchströmungsquerschnitt zumindest eines im Gehäuse ausgebildeten Kanals regelbar ist.

Derartige Klappenvorrichtungen werden beispielsweise im Abgassystem eines Verbrennungsmotors als Abgasrückführventile oder Abgasdruckregelklappen verwendet. In diesem Bereich besteht jedoch häufig das Problem der hohen thermischen Belastung dieser Klappen, welche insbesondere bei elektrischen Antrieben dazu führt, dass diese keine ausreichend lange Lebensdauer aufweisen. Auch können Spannungen durch unterschiedliche thermische Ausdehnungen zwischen den relativ zueinander bewegbaren Körpern entstehen, was zu einer Unbeweglichkeit der Klappe führen kann.

Daher wird in der DE 100 41 579 A1 ein kombiniertes Abgasrückführ- und Bypassventil vorgeschlagen, welches ein Gehäuse aufweist, in dem zwei Kanäle ausgebildet sind, von denen der erste zu einem Abgaskühler führt und der zweite in eine Bypassleitung führt, über die der Abgaskühler umgehbar ist. Die Kanäle werden durch auf einer gemeinsamen Welle angeordnete Klappenkörper beherrscht, die um 90°versetzt zueinander angeordnet sind, so dass der eine Kanal bei Drehung der Welle im gleichen Maß geöffnet wird, wie der andere verschlossen wird. Die Welle ist an der zum Aktor gewandten Seite über eine Bronzebuchsen in einer Lagerstelle des Gehäuses gelagert. Um diese Lagerstelle herum verläuft ein Kühlmittelkanal, so dass der Wärmefluss zum Aktor deutlich verringert wird. Dennoch verbleibt die Gefahr von Wärmespannungen zwischen Klappe und Gehäuse sowie Welle und weiteren Lagerstellen.

Des Weiteren ist aus der JP 11-257104 eine Abgasklappe bekannt, welche einen Abgaskanal beherrscht und auf einer Welle angeordnet ist, die im Gehäuse gelagert ist. Die Lagerung erfolgt über Lager und zusätzliche auf der Welle angeordnete Gleitbuchsen aus Bronze. Eine ausreichende Wärmeabfuhr zur Vermeidung thermischer Spannungen wird nicht sichergestellt.

Die bekannten Klappenvorrichtungen weisen neben den genannten Schwierigkeiten einer nicht immer ausreichenden Wärmeabfuhr den Nachteil auf, dass ihre Montage und Lagerung sehr aufwendig ist.

Es stellt sich daher die Aufgabe, eine Klappenvorrichtung zu schaffen, mit der eine ausreichende Wärmeabfuhr zur Vermeidung einer zu hohen thermischen Belastung sichergestellt wird und welche gleichzeitig einfach aufgebaut und kostengünstig montierbar ist.

Diese Aufgabe wird durch den kennzeichnenden Teil des Hauptanspruchs gelöst. Dadurch, dass die Welle aus einer Bronze hergestellt ist, besteht eine besonders gute Wärmeleitfähigkeit über die gesamte Länge der Welle, so dass die Energie zum Gehäuse abgeführt werden kann. Gleichzeitig ist Bronze als Lagerpartner geeignet, wodurch auf zusätzliche Lager oder Buchsen verzichtet werden kann. Dies verringert den Bauteileaufwand und die Montagekosten.

Vorzugsweise ist auch der Klappenkörper aus einer Bronze hergestellt, wodurch die Wärmeleitung zur Welle und von dort zum außenliegenden Gehäuse noch einmal verbessert wird. Zusätzlich wird ein Hängenbleiben des Klappenkörpers an der Kanalwand durch die schmierenden Eigenschaften der Bronze reduziert.

In einer vorteilhaften Ausführung ist die Welle direkt drehbar in Lagerstellen des Gehäuses angeordnet. Auf zusätzliche Lager oder Buchsen wird vollständig verzichtet, wodurch Kosten eingespart werden.

Um im Gehäuse eine Wärmeabführung sicherzustellen, ist im Gehäuse zumindest ein Kühlmittelkanal ausgebildet. Über das Kühlmittel kann die Wärme aus dem Klappenkörper und die Welle abgeführt werden. Diese aktive Kühlung ermöglicht den Einsatz der Klappenvorrichtung bei höheren Abgastemperaturen.

Vorzugsweise sind auf der Welle zwei Klappenkörper angeordnet, über die die Durchströmungsquerschnitte zweier im Gehäuse ausgebildeter Kanäle regelbar sind. So kann eine derartige Klappenvorrichtung beispielsweise als Abgasrückführventil in einem Verbrennungsmotors eines Lastkraftwagens eingesetzt werden, der zwei getrennte Abgasstränge enthält.

Es wird somit eine Klappenvorrichtung geschaffen, welche unempfindlich gegen hohe thermische Belastungen ist und einfach zu montieren ist, wobei die Anzahl der Bauteile reduziert wird. Entsprechend erhöht sich die Lebensdauer angeschlossener Aktoren und eine fortschreitende Verstellbarkeit wird sichergestellt.

Ein Ausführungsbeispiel einer erfindungsgemäßen Klappenvorrichtung ist in den Figuren dargestellt und wird nachfolgend beschrieben.
Figur 1 zeigt eine Draufsicht auf eine erfindungsgemäße Klappenvorrichtung.

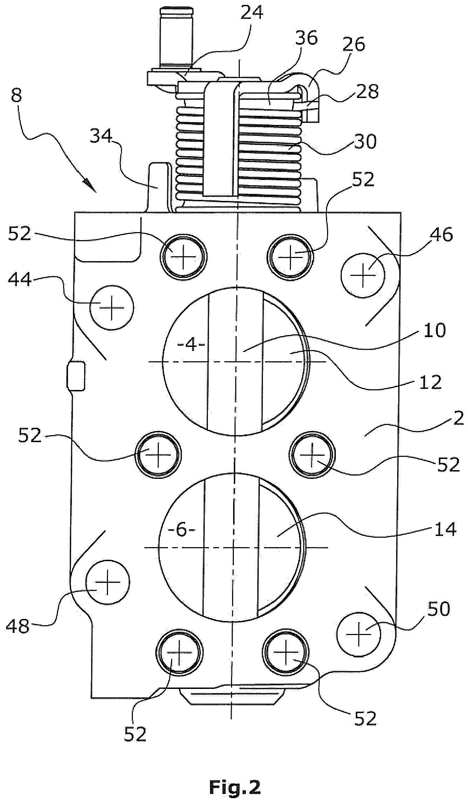

Figur 2 zeigt eine Seitenansicht der Klappenvorrichtung gemäß der Figur 1 in geschnittener Darstellung.

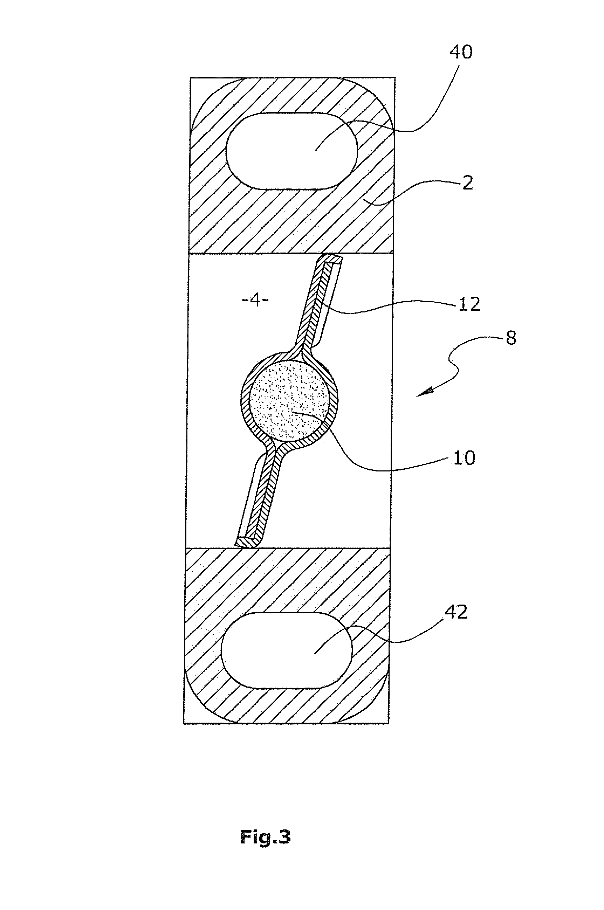

Figur 3 zeigt eine Kopfansicht der Klappenvorrichtung gemäß der Figur 1 in geschnittener Darstellung.

Die erfindungsgemäße Klappenvorrichtung besteht aus einem flanschförmigen Gehäuse 2, in dem zwei Kanäle 4, 6 ausgebildet sind. Das flanschförmige Gehäuse 2 kann an einem Motorblock oder einem Abgaskrümmer befestigt werden. Die Durchströmungsquerschnitte der beiden Kanäle 4, 6 sind mittels eines Ventils 8 regelbar.

Das Ventil 8 besteht aus einer Welle 10, auf der zwei Klappenkörper 12, 14 drehfest angeordnet sind, wobei jedem Abgaskanal 4, 6 ein Klappenkörper 12, 14 zugeordnet ist. Die Lagerung der Welle 10 erfolgt in drei Lagerstellen 16, 18, 20, die durch eine durchgehende Bohrung 22 im Gehäuse 2 gebildet werden.

Die Welle 10 ragt mit einem Ende aus dem Gehäuse 2 seitlich heraus. Auf diesem Ende ist ein Exzenter 24 drehfest angeordnet, der über einen Hebel mit einem weiteren Exzenter gekoppelt werden kann, welcher auf einer Antriebswelle eines nicht dargestellten elektromotorischen Aktors drehfest angeordnet ist, so dass eine Drehbewegung des Aktors auf die Welle 10 des Ventils 8 übertragen wird.

Am Exzenter 24 ist des Weiteren ein Anschlagelement 26 ausgebildet, gegen welches ein erster Endschenkel 28 einer Rückstellfeder 30 anliegt, welche die Welle 10 beziehungsweise einen Fortsatz 32 des Gehäuses 2 umgibt. Diese Rückstellfeder 30 ist als Schraubenfeder ausgeführt, welche die Welle 10 in die die Durchströmungsquerschnitte der Kanäle 4, 6 verschließende Stellung der beiden Klappenkörper 12, 14 in bekannter Weise vorspannt. Hierzu liegt ein entgegengesetzter nicht sichtbarer Federschenkel gegen einen am Gehäuse 2 ausgebildeten Anschlag 34 an. Der Fortsatz 32 ist im Wesentlichen ringförmig ausgebildet, wobei der innere Durchmesser größer ist als der äußere Wellendurchmesser. Auf dem äußeren Umfang des Fortsatzes 32 ist eine zweiteilige Buchse 36 angeordnet, über die die Rückstellfeder 30 gehalten wird. Im Inneren des Fortsatzes 32 liegt ein Dichtring 38 gegen das Gehäuse 4 an, der die Welle 10 umgibt und somit dazu dient, zu verhindern, dass Abgas entlang der Welle 10 austritt. An der entgegengesetzten Seite der Welle 10 wird ein Austreten von Abgas dadurch verhindert, dass die Bohrung 22 als Sackbohrung ausgeführt ist und somit an dieser Seite des Gehäuses 2 geschlossen ist.

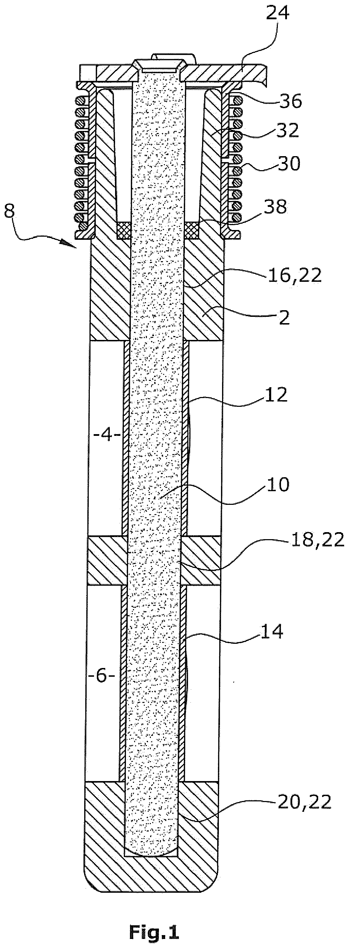

Im Gehäuse 2 sind Kühlmittelkanäle 40, 42 ausgebildet, deren Eintrittsöffnungen 44, 46 und Austrittsöffnungen 48, 50 in Figur 1 zu erkennen sind. Diese Eintritts- und Austrittsöffnungen 44, 46, 48, 50 können entweder mit dem Kühlmittelstrom des Kurbelgehäuses oder eines nachfolgenden Abgaskühlers verbunden werden. Eine solche Verbindung kann durch direkte Befestigung des Gehäuses 2 am Kurbelgehäuse oder am Abgaskrümmer oder Abgaskühler über am Gehäuse 2 ausgebildete Durchganglöcher 52 mittels Schrauben erfolgen. Die Eintritts- und Austrittsöffnungen 44, 46, 48, 50 verlaufen senkrecht zu den Kühlmittelkanälen 40, 42, welche im vorliegenden Ausführungsbeispiel parallel zur Welle 10 an beiden Seiten der Welle 10 entlang führen. Selbstverständlich können die beiden Kühlmittelkanäle 40, 42 auch über eine Querleitung miteinander verbunden werden. Die Kühlmittelkanäle 40, 42 können als offene Bohrungen im Gehäuse 2 ausgeführt werden, weiche dann durch Stopfen verschlossen werden.

Erfindungsgemäß ist die Welle 10 aus einer Bronze, wie Aluminiumbronze oder Phosphorbronze hergestellt. Auch die Klappenkörper 12, 14 können aus Bronze hergestellt werden. Das heiße, durch die Kanäle 4, 6 strömende Abgas gibt seine Wärme an die Klappenkörper 12, 14 und über die Klappenkörper sowie direkt an die Welle 10 ab, so dass diese Teile einer starken thermischen Belastung ausgesetzt sind. Durch die Bronze wird die Wärme jedoch aufgrund der sehr guten Wärmeleitfähigkeit der Bronze ohne großen Widerstand in Richtung des Gehäuses geleitet, von wo die Wärme insbesondere über das durch die Kühlmittelkanäle 40, 42 fließende Kühlmittel abgeführt werden kann. Eine Überhitzung, die zu Wärmeausdehnungen mit folgendem Steckenbleiben der Welle 10 oder der Klappenkörper 12, 14 im Gehäuse 2 führen könnte, wird somit vermieden. Auch wird der Aktor vor Überhitzung geschützt.

Des Weiteren kann auf zusätzliche Buchsen oder Lager verzichtet werden, da die Bronze gute Schmiereigenschaften aufweist und somit die Welle 10 direkt in der Bohrung 22 gelagert werden kann. Dies vereinfacht die Montage, da die Welle 10 nach dem Herstellen der Bohrung 22 und dem Einlegen des Dichtrings 38 von der offenen Seite einfach von dieser Seite in die Bohrung 22 gesteckt werden kann. Anschließend werden die Klappenkörper 12, 14 auf der Welle 10 befestigt und die Welle 10 über den bereits zuvor montierten Exzenter 24 mit dem Aktor verbunden. Entsprechend werden im Vergleich zu bekannten Ausführungen Montageschritte eingespart.

Es sollte deutlich sein, dass der Schutzbereich des Hauptanspruchs nicht auf das beschriebene Ausführungsbeispiel beschränkt ist. Eine Abführung der Wärme aus dem Gehäuse kann beispielsweise auch über äußere Rippen oder anders angeordnete Kühlmittelkanäle erfolgen. Auch können falls gewünscht, zusätzliche Lagerungen verwendet werden. Eine derartige Klappenvorrichtung eignet sich für den Einsatz im gesamten Abgasbereich, also neben der Funktion als Abgasrückführventil auch als Abgasklappe oder Bypassklappe oder für andere Anwendungen mit thermischer Belastung. Selbstverständlich kann die Klappenvorrichtung auch einflutig aufgebaut sein.

## Patentansprüche

1. Klappenvorrichtung für eine Verbrennungskraftmaschine mit einem Gehäuse (2),
einer Welle (10), die im Gehäuse (2) drehbar gelagert ist, einem Aktor über den die Welle (10) drehbar ist und
zumindest einem Klappenkörper (12, 14), der auf der Welle (10) befestigt ist, wobei durch Drehen der Welle (10) ein freier Durchströmungsquerschnitt zumindest eines im Gehäuse (2) ausgebildeten Kanals (4, 6) regelbar ist,
**dadurch gekennzeichnet dass**
die Welle (10) aus einer Bronze hergestellt ist.

2. Klappenvorrichtung für eine Verbrennungskraftmaschine nach Anspruch 1,
**dadurch gekennzeichnet, dass**
der Klappenkörper (12, 14) aus einer Bronze hergestellt ist.

3. Klappenvorrichtung für eine Verbrennungskraftmaschine nach einem der vorhergehenden Ansprüche,
**dadurch gekennzeichnet, dass**
die Welle (10) direkt drehbar in Lagerstellen (16, 18, 20) des Gehäuses (2) angeordnet ist.

4. Klappenvorrichtung für eine Verbrennungskraftmaschine nach einem der vorhergehenden Ansprüche,
**dadurch gekennzeichnete dass**
im Gehäuse (2) zumindest ein Kühlmittelkanal (40, 42) ausgebildet ist.

5. Klappenvorrichtung für eine Verbrennungskraftmaschine nach einem der vorhergehenden Ansprüche,
**dadurch gekennzeichnet" dass**
auf der Welle (10) zwei Klappenkörper (12, 14) angeordnet sind, über die die Durchströmungsquerschnitte zweier im Gehäuse (2) ausgebildeter Kanäle (4, 6) regelbar sind.
